# EUROPÄISCHE PATENTSCHRIFT

(11) **EP 0 752 942 B1**
(45) Veröffentlichungstag und Bekanntmachung des Hinweises auf die Patenterteilung: **24.09.1997**
(21) Anmeldenummer: 95914281.1
(22) Anmeldetag: 30.03.1995
(51) Int. Cl.: B60T 8/36, B60T 8/50, F16K 31/06

(54) **ELEKTROMAGNETISCH BETÄTIGTES VENTIL, INSBESONDERE FÜR SCHLUPFGEREGELTE HYDRAULISCHE BREMSANLAGEN IN KRAFTFAHRZEUGEN**
ELECTROMAGNETICALLY OPERATED VALVE, ESPECIALLY FOR CONTROLLED-SLIP HYDRAULIC BRAKE SYSTEMS IN MOTOR VEHICLES
VANNE A COMMANDE ELECTROMAGNETIQUE, NOTAMMENT POUR SYSTEMES DE FREINAGE HYDRAULIQUES A ANTIPATINAGE D'UN VEHICULE

(30) Priorität: 13.04.1994 DE 4412648
(43) Veröffentlichungstag der Anmeldung: 15.01.1997
(73) Patentinhaber: ROBERT BOSCH GMBH, 70442 Stuttgart (DE)
(72) Erfinder: MITTWOLLEN, Norbert, D-71706 Markgröningen (DE); MAISCH, Wolfgang, D-71701 Schwieberdingen (DE); OEHLER, Martin, D-74139 Weinsberg (DE); HOHL, Guenther, D-70569 Stuttgart (DE); HUEBNER, Hans-Peter, D-70599 Stuttgart (DE)
(86) Internationale Anmeldenummer: DE9500437
(87) Internationale Veröffentlichungsnummer: WO9528305

(56) Entgegenhaltungen:
- DE-A- 3 802 648
- DE-A- 4 035 817
- DE-C- 3 934 771
- US-A- 3 011 753

## Beschreibung

### Stand der Technik

Die Erfindung geht aus von einem elektromagnetisch betätigten Ventil, insbesondere für schlupfgeregelte hydraulische Bremsanlagen in Kraftfahrzeugen, nach der Gattung des Patentanspruchs 1. Die Erfindung betrifft gemäß Anspruch 9 auch ein Verfahren zum Schalten eines derartigen Ventils.

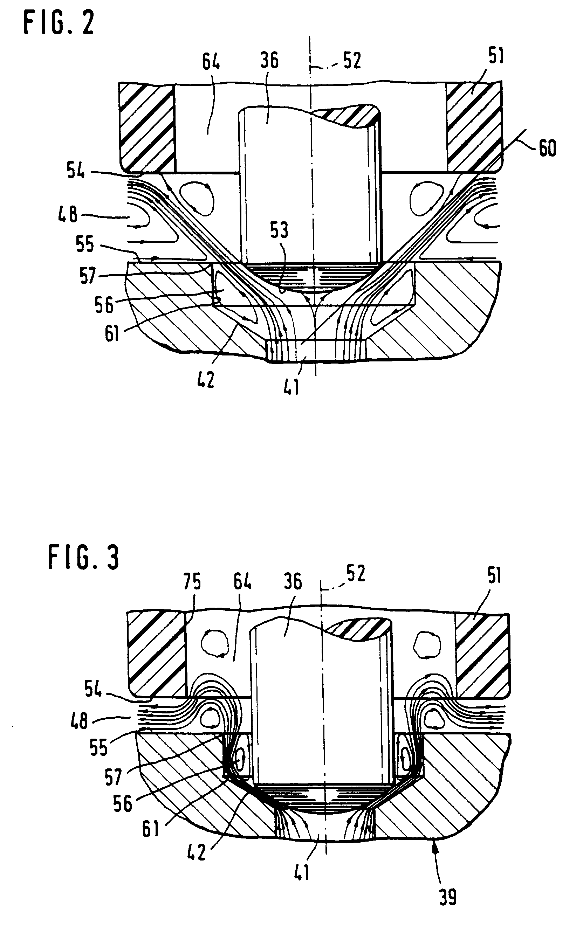

Ein solches Ventil ist durch DE 39 34 771 C1, Figur 3 bekannt. Es weist einen im Ventildom angeordneten, einen Anschlag für den Magnetanker bildenden Steuerkolben auf, der auf einem vom Ventilkörper ausgehenden, den Magnetanker durchdringenden Zapfen längsverschiebbar geführt ist. Der Steuerkolben begrenzt mit seinem ankerabgewandten Boden eine Steuerkammer, welche durch einen den Zapfen und den Steuerkolben gleichachsig durchdringenden Druckmittelkanal mit dem Druckmitteleinlaß des bekannten Ventils in Verbindung steht. Während der Magnetanker an beiden Stirnseiten druckausgeglichen ist, vermag in die Steuerkammer eingesteuerter Druck den Steuerkolben gegen einen Anschlag axial zu verschieben. Hierdurch verringert sich der Hub des Magnetankers um ein vorbestimmtes Maß, was eine Drosselung des Durchflußquerschnitts zur Folge hat.

Diese Wirkungsweise des bekannten Ventils ist nutzbar in schlupfgeregelten hydraulischen Bremsanlagen, bei denen der Druckmitteleinlaß mit dem Hauptbremszylinder und der Druckmittelauslaß mit einem Radbremszylinder in Verbindung stehen. Wird z.B. bei einer Bremsschlupfregelung das Ventil durch Erregen der Magnetspule in seine Schließstellung geschaltet und beim Vermindern des Druckes im Radbremszylinder ein Druckgefälle ausreichender Höhe zwischen dem Druckmitteleinlaß und dem Druckmittelauslaß erzeugt, so bewirkt dies das vorstehend beschriebene Verschieben des Steuerkolbens mit der Folge, daß beim Öffnen des Ventils die erwähnte Drosselung des Durchflußquerschnittes wirksam wird, solange der Druckunterschied zwischen Einlaß und Auslaß besteht. Die Minderung des Durchflußquerschnittes wirkt sich wegen des verringerten Druckgradienten beim auf einen Druckabbau folgenden Druckaufbau einer Bremsschlupfregelung günstig auf die Regelgüte und das Geräuschverhalten der Bremsanlage aus. Bei einer normalen Bremsung ohne Blockiergefahr steht dagegen der volle Durchflußquerschnitt des Ventils zur Verfügung, was eine angestrebte kurze Ansprechzeit der Bremsanlage bei Bremsbetätigung fördert.

Bei dem bekannten Ventil ist jedoch die Festeinstellung des gedrosselten Durchflußquerschnittes nachteilig, weil hierdurch die Durchflußmenge differenzdruckabhängigen Schwankungen unterworfen ist. Außerdem ist die Durchflußmenge ganz wesentlich von dem Absolutmaß des Durchflußquerschnitts abhängig, d.h. der Anschlag bedarf einer sehr engen Tolerierung. Ferner ist das Ventil aufgrund des benötigten Steuerkolbens relativ kostenaufwendig.

### Vorteile der Erfindung

Das erfindungsgemäße Ventil mit den kennzeichnenden Merkmalen des Patentanspruchs 1 hat demgegenüber den Vorteil, daß sich der Durchflußquerschnitt des Sitzventils in Abhängigkeit von den am Anker wirkenden Kräften, jedoch ohne Magnetkraft, bei ausreichend großem Druckgefälle zwischen Einlaß- und Auslaßseite des Ventils selbsttätig auf weitgehend konstante, gegenüber der vollen Öffnung geringere Durchflußmengen einstellt. Der bauliche Aufwand zur Erzielung dieser Funktionsweise des erfindungsgemäßen Ventils als Stromregelventil ist außerordentlich gering, weil die Erzeugung von Staudruck in der Ventilteilkammer durch eine hubabhängige Lenkung der Druckmittelströmung im geometrisch relativ einfach geformten Sitzventilbereich bewirkt wird. Da nur der Ventilstößel die Arbeitsweise bestimmt, ist die Funktionssicherheit des Ventils sehr hoch.

Durch die in den Unteransprüchen aufgeführten Maßnahmen sind vorteilhafte Weiterbildungen und Verbesserungen des im Patentanspruch 1 angegebenen Ventils möglich.

Zweckmäßige Gestaltungen für den Sitzventilbereich sind in den Ansprüchen 2 bis 5 offenbart. Diese Gestaltungen sind mit geringem Fertigungsaufwand erzeugbar.

Die Weiterbildung der Erfindung nach Anspruch 6 ist von Vorteil, weil hierdurch auf einfache Weise eine druckmäßige Trennung der beiden Ankerstirnseiten für die Erzeugung einer Kraftwirkung auf den Magnetanker geschaffen ist.

Zweckmäßige Ausbildungen der Ankerabdichtungen sind in den Ansprüchen 7 und 8 angegeben.

Das erfindungsgemäße Verfahren nach Anspruch 9 zum Schalten des im Anspruch 1 offenbarten Ventils zeichnet sich in vorteilhafter Weise dadurch aus, daß die auf den Magnetanker wirkenden hydraulischen Kräfte durch eine elektromagnetisch erzeugte Kraft überlagert werden, was zur Steuerung des Bremsdruckgradienten genutzt werden kann. Damit ist das Regelverhalten der Bremsanlage günstig beeinflußbar.

### Zeichnung

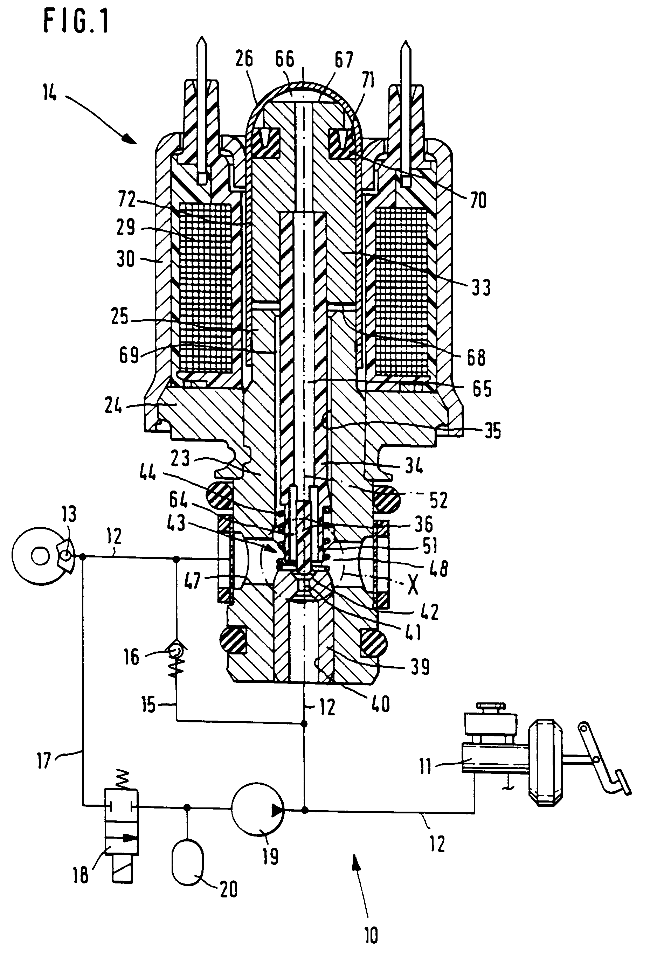

Ein Ausführungsbeispiel der Erfindung ist in der Zeichnung vereinfacht dargestellt und in der nachfolgenden Beschreibung näher erläutert. Es zeigen Figur 1 einen Längsschnitt durch ein elektromagnetisch betätigtes Ventil in einer schematisch angedeuteten Bremsanlage eines Kraftfahrzeugs, Figuren 2 und 3 Strömungsverläufe im in Figur 1 mit x bezeichneten Sitzventilbereich des seine Offenstellung (Figur 2) und seine teilgeschlossene Stellung (Figur 3) einnehmenden Ventils.

### Beschreibung des Ausführungsbeispiels

Eine in Figur 1 sehr vereinfacht wiedergegebene bremsschlupfgeregelte hydraulische Bremsanlage 10 eines Kraftfahrzeugs hat einen zweikreisigen Hauptbremszylinder 11, von dem eine Bremsleitung 12 zu einem Radbremszylinder 13 ausgeht. Im Zuge der Bremsleitung 12 ist ein bei einer Schlupfregelung als Einlaßventil wirkendes, elektromagnetisch betätigtes Ventil 14 angeordnet. In einer das Ventil 14 umgehenden Bypassleitung 15 befindet sich ein Rückschlagventil 16 mit Durchlaßrichtung vom Radbremszylinder 13 zum Hauptbremszylinder 11. Radbremszylinderseitig geht von der Bremsleitung 12 eine Rückführleitung 17 aus, welche das Ventil 14 und das Rückschlagventil 16 umgeht und hauptbremszylinderseitig an die Bremsleitung 12 angeschlossen ist. In der Rückführleitung 17 befinden sich ein Auslaßventil 18 und eine Rückförderpumpe 19 für dem Radbremszylinder 13 entnommenes Druckmittel. Zwischen dem Auslaßventil 18 und der Rückförderpumpe 19 ist eine Speicherkammer 20 an die Rückführleitung 17 angeschlossen.

Das elektromagnetisch betätigte Ventil 14 weist ein zur Aufnahme in einem nicht dargestellten Ventilblock bestimmtes Ventilgehäuse 23 auf, welches mit einer Jochscheibe 24 fest verbunden ist. Das Ventilgehäuse 23 ist über die Jochscheibe 24 hinaus mit einem Polkern 25 fortgesetzt. Auf den Polkern 25 ist ein geschlossener, rohrförmiger Ventildom 26 aufgesteckt. Er ist durch Schweißung mit dem Polkern 25 dicht verbunden. Polkernabgewandt besitzt der Ventildom 26 einen halbkugelförmigen Abschluß.

Der Ventildom 26 ist von einer ringförmigen Magnetspule 29 umgriffen. Ein glockenförmiges Gehäuse 30 umschließt die Magnetspule 29. Das Gehäuse 30 greift einerseits am Ventildom 26 an; andererseits ist es mit der Jochscheibe 24 verbunden.

Im spulenseitig geschlossenen Ventildom 26 ist ein im wesentlichen kreiszylindrischer Magnetanker 33 längsbewegbar aufgenommen. Vom Magnetanker 33 geht ein mit diesem fest verbundener Ventilstößel 34 aus. (Abweichend vom Ausführungsbeispiel ist es auch ausreichend, wenn der Ventilstößel 34 kraftschlüssig und druckdicht zwischen Innenbohrung 65 und Längsbohrung 35 am Magnetanker 33 angreift.) Der Ventilstößel 34 ist in einer Längsbohrung 35 des Polkerns 25 und Ventilgehäuses 23 mit Spiel aufgenommen. An seinem ankerabgewandten Ende trägt der Ventilstößel 34 ein als Ventilnadel 36 bezeichnetes Schließglied (Figuren 2 und 3).

In dem ankerabgewandten Abschnitt der Längsbohrung 35 ist ein hülsenförmiger Ventilkörper 39 mit einer Stufenbohrung 40 eingepreßt, welche nach einer durchmesserkleineren Durchgangsbohrung 41 in einen Ventilsitz 42 mündet. Der Ventilsitz 42 ist hohlkegelförmig ausgebildet mit einem Kegelwinkel von etwa 110°. Die Ventilnadel 36 und der Ventilsitz 42 bilden ein Sitzventil 43 des elektromagnetisch betätigten Ventiles 14. Bei nicht erregter Magnetspule 29 nimmt das Sitzventil 43 aufgrund der Wirkung einer einerseits am Ventilstößel 34 und andererseits am Ventilkörper 39 angreifenden, vorgespannten Rückstellfeder 44 seine Offenstellung als Ruhestellung ein.

Das Ventilgehäuse 23 ist mit einer rechtwinklig die Längsbohrung 35 kreuzenden Querbohrung 47 versehen. Im Durchdringungsbereich beider Bohrungen 35 und 47 ist eine das Sitzventil 43 aufnehmende Ventilkammer 48 geschaffen. Diese steht einerseits über den Ventilsitz 42 und die dazu zentrale Durchgangsbohrung 41 mit der Stufenbohrung 40 als Druckmitteleinlaß des Ventils 14 in Verbindung; andererseits ist ein von der Querbohrung 47 gebildeter Druckmittelauslaß an die Ventilkammer 48 angeschlossen. (Die Bezeichnungen Einlaß und Auslaß sind zutreffend für den Bremsdruckaufbau im Radbremszylinder 13. Bei nicht schlupfgeregelter Bremsung wird das Ventil 14 auch in umgekehrter Richtung vom Druckmittel durchströmt.)

In der Ventilkammer 48 befindet sich auch ein Leitkörper für Druckmittel in der Form eines am Ventilstößel 34 angeformten, geraden hohlzylindrischen Hülsenteils 51. Der Hülsenteil 51 verläuft gleichachsig zur Achse 52 der als gerader Kreiszylinder ausgebildeten Ventilnadel 36. Diese ist stirnseitig gegen den Ventilsitz 42 kugelförmig begrenzt. Das Sitzventil 43 weist somit Kegel-Kugel-Konfiguration auf, die abweichend vom Ausführungsbeispiel auch mit kegelförmig begrenzter Ventilnadel und kugelförmig begrenztem Ventilsitz ausgebildet sein kann. Gegenüber der ventilsitzseitigen Stirnseite 53 der Ventilnadel 36 ist der Hülsenteil 51 mit seiner ventilkammerseitigen Stirnseite 54 axial zurückgesetzt. Diese Stirnseite 54 sowie die ventilkammerseitige Stirnseite 55 des Ventilkörpers 39 liegen in radial zwischen 90° und 45°, vorzugsweise 90° zur Ventilnadelachse 52 verlaufenden Ebenen. Von wesentlicher Bedeutung ist außerdem, daß der Ventilsitz 42 in einer geraden kreiszylindrischen Eintiefung 56 des Ventilkörpers 39 liegt. Diese Eintiefung 56 ist gegen die ventilkammerseitige Stirnseite 55 des Ventilkörpers 39 durch eine Kante 57 begrenzt. Die Eintiefung 56 hat einen Durchmesser, der gleich oder kleiner ist als der Innendurchmesser des Hülsenteils 51. Im dargestellten Ausführungsbeispiel mit achsparallel begrenzter Durchgangsbohrung 41 und Eintiefung 56 des Ventilkörpers 39 sowie Ventilnadel 36 und Hülsenteil 51 des Ventilstößels 34 liegt der Durchmesser der Eintiefung 56 etwa mittig zwischen dem Durchmesser der Ventilnadel 36 und dem Innendurchmesser des Hülsenteils 51.

In der in Figur 2 wiedergegebenen Offenstellung des Ventils 14 verläuft die Stirnseite 53 der Ventilnadel 36 etwa im ventilkammerseitigen Mündungsbereich der Eintiefung 56. Eine im Randbereich der Stirnseite 53 der Ventilnadel 36 angelegte, die Ventilnadelachse 52 unter einem Winkel von etwa 45° schneidende Tangente 60 läuft in der Offenstellung an der stirnseitigen Kante 57 der Eintiefung 56 vorbei. Der axiale Rückstand der Stirnseite 54 des Hülsenteils 51 ist so groß gewählt, daß die Tangente 60 auf diese Stirnseite trifft oder bei vergrößertem axialen Rückstand an der Stirnseite des Hülsenteils vorbeiläuft.

In der in Figur 3 dargestellten teilgeschlossenen Stellung des Ventils 14 ist die Ventilnadel 36 so weit in die Eintiefung 56 eingetaucht, daß die in Figur 3 nicht eingezeichnete Tangente 60 auf die Mantelwand 61 der Eintiefung 56 trifft. In der teilgeschlossenen Stellung des Ventils nehmen die beiden ventilkammerseitigen Stirnseiten 54 und 55 von Hülsenteil 51 und Ventilkörper 39 einen gegenüber der Offenstellung auf weniger als die Hälfte reduzierten axialen Abstand ein.

Die Durchgangsbohrung 41, der Ventilsitz 42 und die Eintiefung 56 des Ventilkörpers 39 sowie die Ventilnadel 36 und der Hülsenteil 51 des Ventilstößels 34 verlaufen gleichachsig zur Achse 52, so daß zwischen der Ventilnadel und dem durchmessergrößeren Hülsenteil eine ringspaltförmige Ventilteilkammer 64 begrenzter axialer Länge gebildet ist. Von der Ventilteilkammer 64 geht ventilsitzabgewandt ein in der Ventilnadelachse 52 verlaufender erster Druckmittelkanal 65 zu einer Steuerkammer 66 aus, die zwischen der schließgliedfernen Stirnseite 67 des Magnetankers 33 und dem Ventildom 26 gelegen ist. Radial außerhalb des Hülsenteils 51 geht von der Ventilkammer 48 ein zweiter, zur schließgliednahen Stirnseite 68 des Magnetankers 33 führender Druckmittelkanal 69 aus. Die Steuerkammer 66 ist umfangseitig des Magnetankers 33 gegen dessen schließgliednahe Stirnseite 68 abgedichtet, und zwar durch eine am Magnetanker aufgenommene Dichtmanschette 70, deren am Ventildom angreifende Dichtlippe 71 gegen die Steuerkammer gerichtet ist. Abweichend vom Ausführungsbeispiel kann es jedoch auch ausreichend sein, den Magnetanker 33 nur durch eine Spaltdichtung 72 gegen den Ventildom 26 abzudichten.

Das Ventil 14 hat folgende Wirkungsweise:

Bei einer vom Fahrer des Fahrzeugs ausgelösten Bremsung ohne Blockiergefahr nimmt das Ventil 14 seine gezeichnete Ruhestellung ein, d. h. das Sitzventil 43 ist geöffnet. Der durch Betätigen des Hauptbremszylinders 11 erzeugte Druck bewirkt durch Verschieben von Druckmittelteilmengen in der Bremsleitung 12 einen Druckanstieg im Radbremszylinder 13. Wie anhand von Stromlinien in Figur 2 ersichtlich, tritt das verschobene Druckmittel von der Durchgangsbohrung 41 kommend in den Ventilsitz 42 ein und verläßt diesen unter tangentialer Umströmung der Stirnseite 53 der Ventilnadel 36 als hohlkegelförmiger Druckmittelstrahl. Dieser erfährt im Bereich der Stirnseite 54 des Hülsenteils 51 eine Ablenkung in radialer Richtung. Danach gelangt das Druckmittel aus der Ventilkammer 48 in den Druckmittelauslaß des Ventils 14. Eine durch die Druckmittelströmung verursachte Druckänderung in der Ventilteilkammer 64 tritt nicht auf. Der vom betätigten Hauptbremszylinder 11 bewirkte Druckanstieg bzw. -abbau ruft dagegen auf dem Weg durch die beiden Druckmittelkanäle 65 und 69 Druckänderungen an den beiden Stirnseiten 67 und 68 des Magnetankers 33 hervor, die sich jedoch kompensieren. Unter der Wirkung der Rückstellfeder 41 behält daher der Magnetanker 33 mit Ventilstößel 34 bei einer solchen Bremsung seine Ruhestellung bei. Mindert der Fahrer den Bremsdruck oder beendet er die Bremsung, so nimmt das Druckmittel seinen Weg in umgekehrter Strömungsrichtung durch das offene Sitzventil 43 sowie durch das parallel zum Ventil 14 angeordnete Rückschlagventil 16 in Richtung auf den Hauptbremszylinder 11.

Bei einer Bremsung mit Blockiergefahr wird das Ventil 14 durch Erregen der Magnetspule 33 in die Arbeitsstellung geschaltet, in welcher durch Verschieben des Magnetankers 33 und des Ventilstößels 34 entgegen der Kraft der Rückstellfeder 44 das Sitzventil 43 in seine Schließstellung überführt ist. Gleichzeitig werden das Auslaßventil 18 in der Rückführleitung 17 in die Durchlaßstellung geschaltet und die Rückförderpumpe 19 in Betrieb gesetzt. Durch Entnahme von Druckmittelteilmengen aus dem Radbremszylinder 13 unter Rückförderung zum Hauptbremszylinder 11 wird radbremsseitig Druck abgebaut und die Blockiergefahr gemindert. In der auf einen Druckabbau folgenden Phase für Druckhalten im Radbremszylinder 13 verbleibt das Ventil 14 in der Arbeitsstellung, während das Auslaßventil 18 in der Rückführleitung 17 in die Schließstellung geschaltet wird.

Für den Druckaufbau im Radbremszylinder 13 behält das Auslaßventil 18 seine Schließstellung bei, und das Ventil 14 wird nicht mehr bestromt. Dies bewirkt ein Verschieben des Magnetankers 33 sowie des Ventilstößels 34 mit Ventilnadel 36 und Hülsenteil 51 aufgrund der Wirkung hydraulischer Kräfte und der Rückstellfeder 44 in Richtung auf die Steuerkammer 66, so daß die Ventilnadel 36 den Ventilsitz 42 freizugeben beginnt und das Sitzventil 43 geöffnet wird. Aufgrund des vorangegangenen Druckabbaus im Radbremszylinder 13 herrscht ein Druckgefälle zwischen der Einlaßseite und der Auslaßseite des Sitzventils 43. Der auslaßseitige, niedrigere Druck ist durch den zweiten Druckmittelkanal 69 an der schließgliednahen Stirnseite 68 des Magnetankers wirksam. Während der Öffnungsbewegung des Magnetankers 33 strömt Druckmittel höheren Drucks vom Hauptbremszylinder 11 in die Ventilkammer 48. Wie aus Figur 3 anhand der Stromlinien sichtbar, trifft in der teilgeschlossenen Stellung des Sitzventils 43 das Druckmittel nach der Ablösung von der Stirnseite 53 der Ventilnadel 36 auf die Mantelwand 61 der Eintiefung 56 im Ventilkörper 39 und erfährt eine etwa achsparallele Ablenkung in Richtung auf die sich zwischen der Ventilnadel und der inneren Mantelfläche 75 des Hülsenteils erstreckende Ventilteilkammer 64. Da diese aufgrund der abgedichteten Steuerkammer 66 keinen Abfluß hat, kehrt das Druckmittel seine Strömungsrichtung um und gelangt durch den engen Spalt zwischen den Stirnseiten 54 und 55 von Hülsenteil 51 und Ventilkörper 39 zum Druckmittelauslaß. Dieser Strömungsverlauf der Druckmittelstrahlen bewirkt einen Staudruck in der Ventilteilkammer 64, der durch den ersten Druckmittelkanal 65 in der Steuerkammer 66 wirksam wird. Der hierdurch druckunausgeglichene Magnetanker 33 (niedriger Druck an der schließgliednahen Stirnseite 68, höherer Druck an der schließgliedfernen Stirnseite 67) unterliegt daher einer der Rückstellfeder 44 entgegengerichteten Kraft, die den Magnetanker 33 mit Ventilstößel 34 eine (teilgeschlossene) Stellung zwischen der Schließstellung und der Offenstellung des Sitzventils 43 einnehmen läßt. Die hierdurch hervorgerufene Minderung des Durchflußquerschnittes des Sitzventils 43 bewirkt eine Drosselung des Druckmittelstromes mit verlangsamtem Druckanstieg im Radbremszylinder 13. Bei ausreichendem Druckgefälle regelt das Ventil 14 die Durchflußmenge auf ein weitgehend konstantes Maß, weil ein höherer Differenzdruck zwischen der Einlaßseite und der Auslaßseite einen größeren Staudruck mit daraus resultierender Minderung des Durchflußquerschnittes am Sitzventil 43 und umgekehrt bewirkt.

Mit dem in aufeinanderfolgenden Phasen von Druckaufbau sich vermindernden Druckgefälle verringert sich auch der Staudruck in der Ventilteilkammer 64. Die Rückstellfeder 44 führt den Magnetanker 33 mit Ventilstößel 34 in seine Ruhestellung zurück, in welcher das Sitzventil 43 seinen vollen Querschnitt für folgende Bremsungen freigibt. Wird jedoch bei gemindertem Durchflußquerschnitt des Sitzventils 43 die Bremsung durch Entlasten des Hauptbremszylinders 11 abgebrochen, so kann das Druckmittel auch unverzögert aus dem Radbremszylinder 13 durch das Rückschlagventil 16 ungedrosselt abströmen.

In der vorbeschriebenen Funktionsweise mit teilgeschlossener Stellung des Sitzventils 43 ist die Magnetspule 29 stromlos und der Magnetanker 33 lediglich hydraulischen Kräften sowie der Kraft der Rückstellfeder 44 unterworfen. Das Ventil 14 ermöglicht somit einen langsamen, weitgehend differenzdruckunabhängigen Druckaufbau im Radbremszylinder 13, welcher durch die geometrischen Flächenverhältnisse des Ventils 14 am Magnetanker 33 und Ventilstößel 34 bestimmt ist. Der Druckaufbau kann durch geringe Zusatzkräfte in Ventilschließrichtung verlangsamt werden. Diese Zusatzkräfte können als Magnetkräfte dadurch erzeugt werden, daß das Ventil 14 aus seiner Schließstellung heraus durch Bestromen seiner Magnetspule 29 mit einem Strom niedriger konstanter Höhe oder mit einem mittelfrequent oder hochfrequent getakteten Strom in eine noch weiter reduzierte teilgeschlossene Stellung überführt wird. Dieser Strom ist niedriger als der zum Schalten des Ventils 14 in seine Schließstellung. Die Höhe des Stromes erlaubt es, den Druckgradienten beim Bremsdruckaufbau zu verändern.

## Patentansprüche

1. Elektromagnetisch betätigtes Ventil (14), insbesondere für schlupfgeregelte hydraulische Bremsanlagen in Kraftfahrzeugen, mit folgenden Merkmalen:
- in einem Ventildom (26) ist ein Magnetanker (33) längsbewegbar aufgenommen,
- der Ventildom (26) ist von einer Magnetspule (29) umgriffen,
- vom Magnetanker (33) geht ein Ventilstößel (34) mit einem ankerabgewandt angeordneten Schließglied (36) aus,
- in einem Gehäuse (23) des Ventils (14) ist ein Ventilkörper (39) mit einem Ventilsitz (42) mit zentraler Durchgangsbohrung (41) als Druckmitteleinlaß befestigt,
- bei nicht erregter Magnetspule (29) ist das Schließglied (36) aufgrund der Wirkung einer Rückstellfeder (44) vom Ventilsitz (42) abgehoben,
- das Schließglied (36) und der den Ventilsitz (42) aufweisende Teil des Ventilkörpers (39) befinden sich, ein Sitzventil (43) bildend, in einer Ventilkammer (48), welche mit einem Druckmittelauslaß des Ventils (14) in Verbindung steht,
- die Ventilkammer (48) weist eine als Stauraum wirkende, von einem mit dem Magnetanker (33) bewegbaren Hülsenteil (51) des Ventilstößels (34) umschlossene Ventilteilkammer (64) auf, von der ein erster Druckmittelkanal (65) zu einer Steuerkammer (66) ausgeht, die zwischen der schließgliedfernen Stirnseite (67) des Magnetankers (33) und dem Ventildom (26) gelegen ist,
- von der Ventilkammer (48) geht ein zweiter, zur schließgliednahen Stirnseite (68) des Magnetankers (33) führender Druckmittelkanal (69) aus,
- ein in der Ventilteilkammer (64) erzeugter Druck vermag in der Steuerkammer (66) eine entgegen der Kraft der Rückstellfeder (44) wirkende Kraft hervorzurufen, aufgrund der das Sitzventil (43) eine von seiner Ruhestellung abweichende, teilgeschlossene Stellung einnimmt,
gekennzeichnet durch die weiteren Merkmale:
- das Sitzventil (43) weist Kegel-Kugel-Konfiguration auf, wobei beispielsweise der Ventilsitz (42) kegelförmig und das Schließglied (36) stirnseitig kugelförmig ausgebildet sind,
- der Ventilsitz (42) liegt in einer wenigstens annähernd geraden, kreiszylindrischen Eintiefung (56) des Ventilkörpers (39), der mit wenigstens annähernd radial verlaufender Stirnseite (55) gegen die Ventilkammer (48) begrenzt ist,
- der Ventilstößel (34) geht sitzseitig in ein das Schließglied bildende, wenigstens annähernd zylindrische Ventilnadel (36) über, welche von dem Hülsenteil (51) gleichachsig mit radialem Abstand sowie mit axialem Rückstand gegenüber ihrer sitzseitigen Stirnseite (53) umgriffen ist,
- der axiale Rückstand des Hülsenteils (51) ist derart bemessen, daß eine im Randbereich der Ventilnadel-Stirnseite (53) angelegte, die Ventilnadelachse (52) schneidende Tangente (60) auf die Stirnseite (54) des Hülsenteils (51) trifft oder außerhalb des Hülsenteils an der Stirnseite vorbeiläuft,
- in der Offenstellung des Sitzventils (43) verläuft die Stirnseite (53) der Ventilnadel (36) wenigstens annähernd im ventilkammerseitigen Mündungsbereich der Eintiefung (56), so daß die Tangente (60) an der stirnseitigen Kante (57) der Eintiefung vorbeiläuft, während sie in der teilgeschlossenen Stellung des Sitzventils auf die Mantelwand (61) der Eintiefung trifft.

2. Ventil nach Anspruch 1, dadurch gekennzeichnet, daß die Tangente (60) einen Winkel zwischen 30°und 60°, vorzugsweise 45°, zur Ventilnadelachse (52) einschließt.

3. Ventil nach Anspruch 1, dadurch gekennzeichnet, daß die Eintiefung (56) des Ventilkörpers (39) einen Durchmesser hat, der gleich oder kleiner ist als der Innendurchmesser des Hülsenteils (51).

4. Ventil nach Anspruch 3, dadurch gekennzeichnet, daß der Durchmesser der Eintiefung (56) wenigstens annähernd mittig zwischen dem Durchmesser der Ventilnadel (36) und dem Innendurchmesser des Hülsenteils (51) liegt.

5. Ventil nach Anspruch 1, dadurch gekennzeichnet, daß die Durchgangsbohrung (41) und die Eintiefung (56) des Ventilkörpers (39), die Ventilnadel (36) und die innere Mantelfläche des Hülsenteils (51) des Ventilstößels (34) achsparallel begrenzt sind, während die ventilkammerseitigen Stirnseiten (53, 55) von Hülsenteil (51) und Ventilkörper (39) in radial zwischen 90° und 45°, vorzugsweise 90° zur Ventilnadelachse (52) verlaufenden Ebenen liegen.

6. Ventil nach Anspruch 1, dadurch gekennzeichnet, daß die Steuerkammer (66) umfangseitig des Magnetankers (33) gegen dessen schließgliednahe Stirnseite (68) abgedichtet ist.

7. Ventil nach Anspruch 6, dadurch gekennzeichnet, daß der Magnetanker (33) eine Dichtmanschette (70) trägt, deren am Ventildom (26) angreifende Dichtlippe (71) gegen die Steuerkammer (66) gerichtet ist.

8. Ventil nach Anspruch 6, dadurch gekennzeichnet, daß der Magnetanker (33) durch eine Spaltdichtung (72) gegen den Ventildom (26) abgedichtet ist.

9. Verfahren zum Schalten des elektromagnetisch betätigten Ventils (14) nach Anspruch 1, welches in einer schlupfgeregelten hydraulischen Bremsanlage (10) eines Kraftfahrzeugs zwischen einem Hauptbremszylinder (11) und einem Radbremszylinder (13) in einer Bremsleitung (12) angeordnet ist und bei einer Schlupfregelung für Bremsdruckabbau im Radbremszylinder (13) durch Bestromen seiner Magnetspule (29) in seine Schließstellung und für Bremsdruckaufbau stromlos in seine Offenstellung geschaltet wird, dadurch gekennzeichnet, daß das Ventil (14) aus seiner Schließstellung heraus durch Bestromen seiner Magnetspule (29) mit einem Strom niedriger konstanter Höhe oder mit einem mittelfrequent oder hochfrequent getakteten Strom, welcher niedriger als der Strom zum Schließen des Ventils (14) ist, in eine weiter reduzierte teilgeschlossene Stellung überführt wird.

## Claims

1. Electromagnetically operated valve (14), especially for slip-controlled hydraulic brake systems in motor vehicles, having the following features:
- a magnet armature (33) is accommodated in longitudinally movable fashion in a valve dome (26),
- the valve dome (26) is surrounded by a magnetic coil (29),
- emanating from the magnet armature (33) is a valve tappet (34) with a closing member (36) arranged at the end remote from the armature,
- a valve body (39) with a valve seat (42) having a central through hole (41) as a pressure-medium inlet is secured in a housing (23) of the valve (14),
- with the magnet coil (29) unexcited, the closing member (36) is raised from the valve seat (42) due to the action of a return spring (44),
- the closing member (36) and that part of the valve body (39) which has the valve seat (42) are located, forming a seat valve (43), in a valve chamber (48) which is connected to a pressure-medium outlet of the valve (14),
- the valve chamber (48) has a valve subchamber (64) which acts as a retention space, is surrounded by a sleeve part (51) of the valve tappet (34), said sleeve part being movable by means of the magnet armature (33), and from which there emanates a first pressure-medium passage (65) leading to a control chamber (66) situated between the valve dome (26) and that end (67) of the magnet armature (33) which is remote from the closing member,
- emanating from the valve chamber (48) is a second pressure-medium passage (69), which leads to that end (68) of the magnet armature (33) which is close to the closing member,
- a pressure produced in the valve subchamber (64) is able to produce in the control chamber (66) a force which acts counter to the force of the return spring (44) and owing to which the seat valve (43) assumes a partially closed position which deviates from its rest position,
characterized by the following further features:
- the seat valve (43) has a sphere and cone configuration, for example the valve seat (42) being of conical design and the closing member (36) being of spherical design at the end,
- the valve seat (42) rests in an at least approximately straight circular-cylindrical cavity (56) in the valve body (39), the said cavity being delimited with respect to the valve chamber (48) by an end (55) extending at least approximately radially,
- at the seat end, the valve tappet (34) merges into an at least approximately cylindrical valve needle (36) which forms the closing member and which is surrounded coaxially by the sleeve part (51) with a radial clearance and with an axial offset relative to its seat end (53),
- the axial offset of the sleeve part (51) is dimensioned such that a tangent (60) which touches an end (53) of the valve needle in the edge region and intersects the valve-needle axis (52) meets the end (54) of the sleeve part (51) or runs past the end outside the sleeve part,
- in the open position of the seat valve (43), the end (53) of the valve needle (36) extends at least approximately in the valve-chamber-end mouth region of the cavity (56), so that the tangent (60) runs past the end edge (57) of the cavity, while, in the partially closed position of the seat valve, it meets the circumferential wall (61) of the cavity.

2. Valve according to Claim 1, characterized in that the tangent (60) encloses an angle of between 30° and 60°, preferably 45°, relative to the valve needle axis (52).

3. Valve according to Claim 1, characterized in that the cavity (56) of the valve body (39) has a diameter which is equal to or less than the inside diameter of the sleeve part (51).

4. Valve according to Claim 3, characterized in that the diameter of the cavity (56) lies approximately centrally between the diameter of the valve needle (36) and the inside diameter of the sleeve part (51).

5. Valve according to Claim 1, characterized in that the through hole (41) and the cavity (56) of the valve body (39), the valve needle (36) and the inner circumferential surface of the sleeve part (51) of the valve tappet (34) have boundaries parallel to the axis, while the valve-chamber ends (53, 55) of the sleeve part (51) and the valve body (39) lie in planes which extend radially at between 90° and 45°, preferably 90°, to the valve-needle axis (52).

6. Valve according to Claim 1, characterized in that the control chamber (66) is sealed off at the circumference of the magnet armature (33) from that end (68) of the latter which is close to the closing member.

7. Valve according to Claim 6, characterized in that the magnet armature (33) carries a sealing sleeve (70), the sealing lip (71) of which, which engages on the valve dome (26), points towards the control chamber (66).

8. Valve according to Claim 6, characterized in that the magnet armature (33) is sealed off from the valve dome (26) by a gap seal (72).

9. Method for switching the electromagnetically operated valve (14) according to Claim 1, which is arranged in a brake line (12), between a brake master cylinder (11) and a wheel-brake cylinder (13), in a slip-controlled hydraulic brake system (10) of a motor vehicle and, during a slip control operation, is switched to its closed position by energising its magnet coil (29) for brake-pressure reduction in the wheel-brake cylinder (13) and is switched to its open position in the deenergised state for brake-pressure build-up, characterized in that the valve (14) is moved from its closed position into a further-reduced, partially closed position by energizing its magnet coil (29) with a current at a low constant level or with a medium- frequency or radio-frequency pulsed current which is lower than the current for closing the valve (14).

## Revendications

1. Vanne (14) commandée de façon électromagnétique, en particulier pour des systèmes de freinage hydrauliques à antipatinage dans des véhicules à moteur, avec les particularités suivantes :
- une armature de l'électroaimant (33) qui peut coulisser longitudinalement est logée dans un dôme de vanne (26),
- le dôme de la vanne (26) est entouré d'une bobine d'électroaimant (29),
- de l'armature de l'électroaimant (33) part un poussoir de vanne (34) avec un organe d'obturation (36) disposé à l'opposé de l'armature,
- dans un boîtier (23) de la vanne ( 14) on a fixé un corps de vanne (39) avec un siège de vanne (42) avec un alésage central de passage (41) en tant qu'entrée du fluide sous pression,
- quand la bobine de l'électroaimant (29) n'est pas excitée, l'organe d'obturation (36) est soulevé par rapport au siège de la vanne (42) du fait de l'action d'un ressort de rappel (44),
- l'organe de fermeture (36) et la partie présentant le siège de vanne (42) du corps de vanne (39) se trouvent dans une chambre de vanne (48) formant le siège de vanne (43), chambre de vanne qui est en liaison à la sortie du fluide sous pression de la vanne (14),
- l'organe d'obturation (48) présente une chambre partielle de vanne (64), qui agit comme un espace dynamique, et qui est entourée par une pièce en forme de manchon (51) du poussoir de la vanne (34), qui peut être déplacée par l'armature de l'électroaimant (33), chambre partielle de la vanne à partir de laquelle part un premier canal de fluide sous pression (65) allant à une chambre de commande (66), qui est mise entre la face frontale (67) de l'armature de l'électroaimant (33), éloignée de l'organe d'obturation, et le dôme de la vanne (26),
- de la chambre de la vanne (48) part un second canal de fluide sous pression (69), qui conduit à la face frontale (68) de l'armature de l'électroaimant (33), qui est proche de l'organe d'obturation,
- une pression produite dans la chambre partielle de la vanne (64) a la possibilité d'engendrer dans la chambre de commande (66) une force agissant à l'encontre de la force du ressort de rappel (44), sur la base de laquelle la vanne à siège (43) prend une position partiellement fermée, qui s'écarte de sa position de repos,
caractérisée par les autres particularités suivantes :
- la vanne à siège (43) présente une configuration en forme de cône et de sphère, dans laquelle par exemple le siège de la vanne (42) est constitué en forme de cône et l'organe d'obturation (36) est constitué du côté frontal en forme de sphère,
- le siège de la vanne (42) se trouve dans un renfoncement (56) du corps de la vanne (39), qui est au moins approximativement rectiligne, et de forme cylindrique creuse, et qui est limité par une face frontale (55), par rapport à la chambre de la vanne (48), qui s'étend radialement au moins approximativement ,
- le poussoir de la vanne (34) se transforme du côté du siège dans une aiguille de vanne (36) qui constitue le corps d'obturation et qui est au moins approximativement cylindrique , aiguille qui est entourée par la pièce en forme de manchon (51) ayant le même axe à une certaine distance radiale et avec un retrait axial par rapport à sa face frontale située du côté du siège,
- le retrait axial de la pièce en forme de manchon (51) ayant une dimension telle qu'une tangente adjacente à la zone de bordure de la face frontale (53) de l'aiguille de la vanne et qui coupe l'axe de l'aiguille de la vanne (52) atteint la face frontale (54) de la pièce en forme de manchon (51)ou passe en dehors de la pièce en forme de manchon devant la face frontale,
- quand la vanne à siège (43) est en position ouverte la face frontale (53) de l'aiguille de la vanne (36) s'étend au moins approximativement dans la zone de l'embouchure du renfoncement (56), située du côté de la chambre de la vanne, de telle sorte que la tangente (60) passe devant le bord (57), situé du côté frontal, du renfoncement, tandis qu'elle atteint, quand la vanne à siège est en position en partie fermée, la paroi enveloppe (61) du renfoncent.

2. Vanne selon la revendication 1,
caractérisée en ce que
la tangente (60) forme un angle compris entre 30° et 60°, de préférence un angle de 45°, par rapport à l'axe de l'aiguille de la vanne (52).

3. Vanne selon la revendication 1,
caractérisée en ce que
le renfoncement (56) du corps de la vanne (39) a un diamètre, qui est égal ou inférieur au diamètre intérieur de la pièce en forme de manchon (51).

4. Vanne selon la revendication 3,
caractérisée en ce que
le diamètre du renfoncement (56) se trouve au moins approximativement compris au milieu entre le diamètre de l'aiguille de la vanne (36) et le diamètre intérieur de la pièce en forme de manchon (51).

5. Vanne selon la revendication 1,
caractérisée en ce que
l'alésage de passage (41) et le renfoncement (56) du corps de la vanne (39), l'aiguille de la vanne (36) et la surface enveloppe intérieure de la pièce en forme de manchon (51) du poussoir de la vanne (34) ont leurs axes parallèles, tandis que les faces frontales, situées du côté de la chambre de la vanne, (53, 55) de la pièce en forme de manchon (51) et du corps de la vanne (39) s'étendent dans des plans radiaux compris entre 90° et 45°, de préférence 90° par rapport à l'axe de l'aiguille de la vanne (52).

6. Vanne selon la revendication 1,
caractérisée en ce que
la chambre de commande (66) est rendue étanche du côté du pourtour de l'armature de l'électroaimant (33) par rapport à sa face frontale (68) proche de l'organe d'obturation.

7. Vanne selon la revendication 6,
caractérisée en ce que
l'armature de l'électroaimant (33) porte une manchette d'étanchéité (70), dont la lèvre d'étanchéité (71), qui vient en prise sur le dôme de la vanne (26) est orientée vers la chambre de commande (66)

8. Vanne selon la revendication 6,
caractérisée en ce que
l'armature de l'électroaimant (33) est rendue étanche par une garniture d'étanchéité de fente (72) par rapport au dôme de la vanne (26).

9. Procédé pour brancher la vanne (14), commandée de façon électromagnétique, selon la revendication 1, qui est disposée dans un système de freinage hydraulique à antipatinage (10) d'un véhicule à moteur, entre le maître cylindre du système de freinage (11) et un cylindre de frein de roue (13) dans une conduite de freinage (12), et qui est branché lors d'une régulation de l'antipatinage pour abaisser la pression de freinage dans le cylindre de frein de roue (13) en alimentant en courant sa bobine d'électroaimant (29) dans sa position fermée et pour faire monter la pression, en n'envoyant pas de courant électrique, dans sa position ouverte,
caractérisé en ce que
l'on fait passer la vanne (14) à partir de sa position de fermeture en alimentant sa bobine d'électroaimant (29) avec un courant électrique de basse intensité constante ou avec un courant à fréquence moyenne ou à haute fréquence, qui est plus faible que le courant servant à la fermeture de la vanne (14), dans une position de fermeture partielle encore plus réduite.
